# EUROPEAN PATENT APPLICATION

(11) **EP 2 081 097 A1**
(43) Date of publication of application: **22.07.2009**
(21) Application number: 08075068.0
(22) Date of filing: 29.01.2008
(51) Int. Cl.: G05B 23/02, G05D 23/19, G06Q 10/00

(54) **Method and device for saving energy**

(30) Priority: 31.01.2007 NL 1033310
(71) Applicant: Nuon Retail B.V., 1096 BA Amsterdam (NL)
(72) Inventor: Van den Essenburg, Evert W., 1135 AJ Edam (NL); Verberne, Petrus H., 5212 BG Den Bosch (NL); Van Minderhout, Adrianus C., 1079 ZR Amsterdam (NL); Van Hattum, Bart, 3038 BR Rotterdam (NL)
(74) Representative: Fluit, Jeroen

(57) **Abstract**

A method and a device are provided for the disclosing of energy consumption in a building, or part thereof, when no person is present in the building. Based on the results of the method, energy-saving measures can be taken.

The method includes the substantially simultaneous detecting of the presence of a person and the energy consumption and the comparing, after a period of time, of the presence and the energy consumption.

The device comprises a presence sensor for determining the presence of a person in a building and an energy consumption sensor for determining energy consumption. Furthermore, the device comprises a data collection device for the collecting of the consumption data and the presence data from the respective sensors and a storage medium for the storing of the collected data. The device further comprises a representation device for the representing of the collected data.

## Description

The present invention relates to a method for saving energy. The invention also relates to a device for carrying out the method.

It is now common knowledge that our current consumption of energy is unsustainable with regard to the future. This is the result of dwindling supplies of fossil fuels which are used domestically and in industry for heating and indirectly for providing electrical energy, it being known that fossil fuels will run out. As a result of the running-out of fossil fuels in combination with market processes of supply and demand, the costs of energy consumption will soar in the future. Furthermore, our consumption of energy is unsustainable in the light of the environment and climate change.

On the other hand, the use of other, preferably renewable energy sources may allow us to continue our current lifestyle if energy is used prudently.

If a user seeks to save energy, he will look for energy-saving means and measures. This will generally involve exchanging equipment which consumes a relatively large amount of energy for equipment which consumes less energy. In particular, the user will apply simple measures such as replacing standard light bulbs with generally available energy-saving bulbs.

However, if an energy-saving apparatus has a drawback compared to the conventional apparatus which consumes a large amount of energy, the user will not replace the old apparatus. For example, an energy-saving bulb often has the drawback that it has first to warm up for some time before it gives off enough light. This is generally felt to be disadvantageous since people expect a room to be adequately lit as soon as they flick the light switch. Furthermore, low-energy bulbs generally give off white light, whereas many users prefer atmospheric lighting and thus would rather use standard light bulbs.

Similar considerations apply to heating a living or working space. If a user wishes to cut down on heating costs, he will quickly turn to insulation measures and replace the heating boiler with a new heating boiler having a higher output. However, insulation measures and replacing heating boilers are usually not simple tasks which the user himself performs and, in addition, both measures often entail relatively high costs, wherein it takes a few years before the user recovers the costs of his energy-saving measures.

Considerable savings are usually possible by using energy-consuming equipment, including lighting, and heating in an energy-conscious manner. In other words, energy consumption can be lowered if the user switches off equipment and lighting when he leaves a room and switches off the heating when he leaves a room for a relatively long period. However, users generally have no idea how often they leave an apparatus or lighting on, or else do not switch off the heating, when they leave a room. Therefore, they do not know how much energy is wasted, and thus could potentially be saved, nor do they know how much money can be saved in this way.

An object of the present invention is to provide a method and a device which allow a user himself to obtain in a simple manner an image of his unnecessary energy consumption.

The object is achieved in a method according to claim 1 and in a device according to claim 5.

The method according to the present invention collects data about the energy consumed in relation to the presence of a person in a building or a part thereof, such as a room. A presence sensor, which is generally known in the art, is used to determine the presence of a person. A sensor of this type can determine, based on movement and/or heat, whether a person is present.

There are a number of possible sensors for determining energy consumption. A first example is a temperature sensor. The detected temperature indicates whether a heating appliance is switched on. A heating appliance consumes a relatively large amount of energy. A second example is a light sensor. The detected amount of light indicates whether a light bulb is switched on. A third example is an electric current meter. A current meter of this type can, for example, be placed between a supply, for example a mains power supply, and an electrical apparatus, thus allowing the power consumed by the apparatus to be determined.

The data from the presence sensor and the consumption sensor is collected and simultaneously displayed as a function of time. This gives a user an idea of the energy consumed when no person is present in the building, or the part thereof. Energy which is consumed without a person being present is generally wasted energy. The prevention of energy wastage provides an energy saving which does not detract the user's lifestyle. Based on the insight obtained, users can adapt their behaviour, for example turn the light off when they leave a building, or they can take technical measures to reduce their energy consumption, wherein they know in advance that each technical measure will in their case yield a substantial saving and how much money they save with each measure.

Preferably, the data from the respective sensors is sent electronically to a computer processing unit. A computer processing unit of this type may, for example, be a normal home computer (PC). The computer processing unit has the means and capacity to receive the sensor data and to process it to form a suitable display from which the user can easily infer the energy wasted, or at least can infer when energy is wasted. Preferably, the computer processing unit is configured to analyze the data and to offer advice about the measures to be taken in order to save energy and accordingly to save money.

In one embodiment, the collected data is sent electronically via a network connection, for example via an internet connection, to a central computer processing unit. A central computer processing unit of this type can easily be configured in order to carry out the method steps described and to represent the resulting data and representation via, for example, a (personalized) webpage.

The device according to the present invention comprises the above-mentioned presence sensor for determining the presence of a person in a room, the presence sensor generating presence data; and the above-mentioned energy consumption sensor for determining energy consumption, the energy consumption sensor generating consumption data.

The device further comprises a data collection device which is operatively connected to the presence sensor and the energy consumption sensor for the collecting of the consumption data and the presence data from the respective sensors. The data collection device is thus substantially intended for the controlling of the data flows from the respective sensors. Preferably, the connection between the data collection device and the respective sensors is wireless.

The device further comprises a storage medium which is operatively connected to the data collection device for the storing of the collected data. The collected data is stored in order to obtain after a period, for example a day, week or month, an overview of the presence and the energy consumption.

Finally, the device further comprises a display device which is operatively connected to the storage medium and/or the data collection device to display the collected data for determining energy consumption in the building when no person is present in the building, or a part thereof.

The storage medium can be provided locally in proximity to the sensors and the collected and stored data can be processed on a local computer processing unit, as described hereinbefore, to form a suitable display. In another embodiment, the storage medium is located locally but the computer processing unit is arranged centrally and connected via a network connection, for example an internet connection, to the storage medium for the receiving of the collected and stored data. In another embodiment, the storage medium, like the processing unit, is arranged centrally and the storage medium receives data from the data collection device via a network connection. In the latter embodiment, the number of locally arranged components of the device is relatively small and simple and can therefore be manufactured relatively inexpensively.

The present invention also provides a device according to claim 9. The energy-saving device according to claim 9 uses a state sensor and the energy consumption sensor to control an apparatus and thus to save energy. For this purpose, the energy-saving device comprises a state sensor for determining an environmental condition, such as air humidity and/or the presence of a person in a building or a part thereof, the state sensor generating state data; and an energy consumption sensor for determining energy consumption, the energy consumption sensor generating consumption data. The energy-saving device further comprises a control circuit for the controlling of an apparatus based on the state data and the energy consumption data. If no person is present in the building or part thereof, the energy-saving device can switch off the apparatus or reduce its energy consumption level. For example, lights, a television or radio can be switched off if no person is present. The energy consumption level of heating, in particular central heating, can be reduced. For example, for every 15 minutes or every half an hour that no person is detected, the level can be reduced by a further step. Similarly, the state sensor can determine, in addition to or instead of the presence of a person, also other environmental conditions and adjust and control the apparatus based on the environmental conditions.

In one embodiment, the energy consumption sensor comprises a temperature sensor and the control circuit is configured to control a heating apparatus, as described hereinbefore.

In one embodiment, the device further comprises a data collection device which is operatively connected to the presence sensor and the energy consumption sensor for the collecting of the consumption data and the presence data from the respective sensors; and a storage medium which is operatively connected to the data collection device for the storing of the collected data. Furthermore, in an embodiment of this type, the device comprises a processing unit for the processing of the presence data and the consumption data for the generating of a normal presence pattern and a normal consumption pattern as a function of time and for the switching-on, based on the normal presence pattern, of the heating appliance at such times that the building or part thereof has a desired temperature when a person enters the building or part thereof in accordance with the normal presence pattern. If an energy-saving device has a presence sensor and the facility to store the data concerning the presence of persons, the device can predict, based on the stored data, when someone will be present in the building, or part thereof. As heating a building or part thereof takes a certain amount of time, the prediction of the presence can advantageously be used by beginning the heating of the building even before the presence of a person has been detected.

The invention will be described hereinafter in greater detail with reference to the appended drawings which show non-limiting embodiments and in which:
Fig. 1 is a block diagram of an embodiment of the method according to the invention;
Fig. 2 shows schematically an embodiment of a device according to the invention;
Fig. 3 shows an example of a representation of presence data and energy consumption data according to the present invention; and
Fig. 4A and 4B show an embodiment of an energy-saving device according to the present invention.

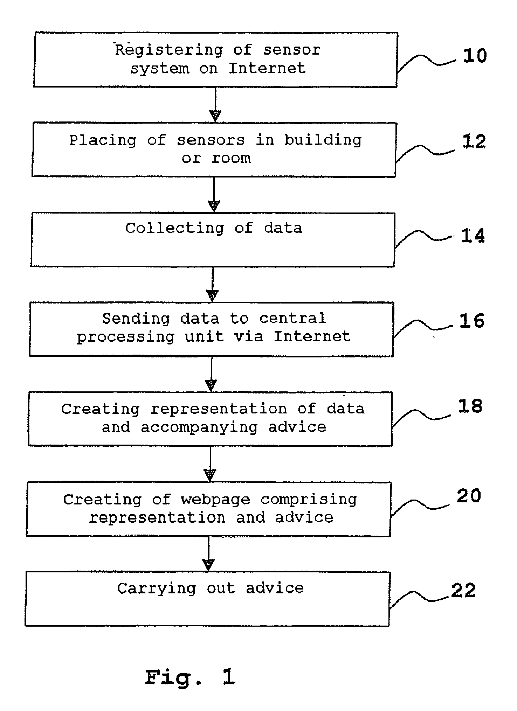

In the drawings, like reference numerals denote like elements. Fig. 1 shows schematically an embodiment of the method according to the invention. In the method represented in Fig. 1 and described hereinafter, it is assumed that an external party, for example an energy supplier or a consultant, provides a user with a device for carrying out the method. As will be described hereinafter in detail, a first part of the device is to be installed locally on the user's premises and a second part of the device is placed on the premises of the external party. The first part and the second part are able to transfer data to each other via an electronic connection, for example a telephone connection or a computer network connection such as an internet connection.

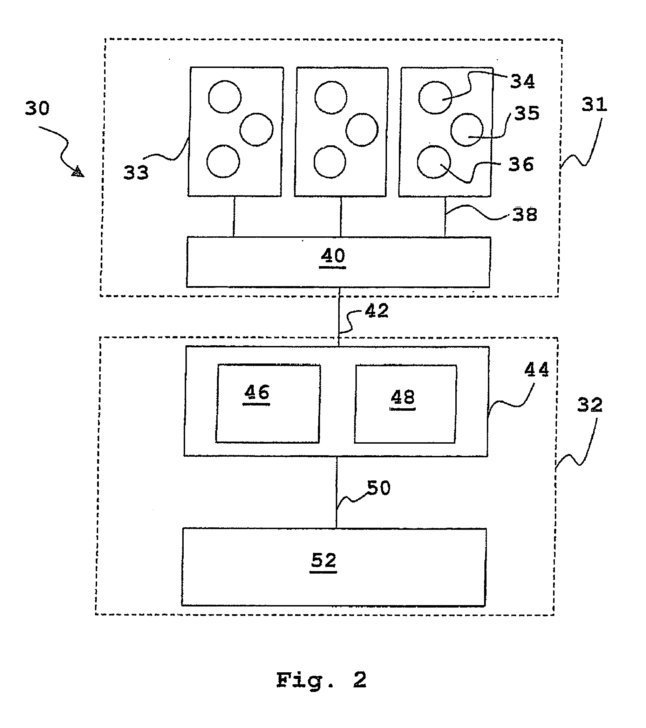

Fig. 2 shows an embodiment of a device 30 for the disclosing of the energy consumption in relation to presence. As stated hereinbefore, the device 30 can be split into a first part 31 and a second part 32. The first part 31 comprises three sensor assemblies 33 which each comprise a presence sensor 34, a light sensor 35 and a temperature sensor 36. The presence sensor 34 may, for example, be a motion sensor or a heat sensor, or may be any other suitable sensor. The light sensor 35 and the temperature 36 can also be configured in various ways which are known in the art and will therefore not be described in detail in the present document.

Each sensor assembly 33 is connected to a data collection device 40 via a suitable local connection 38. The local connection 38 can be a wired connection or a wireless connection such as are known in the art. The data collection device 40 is configured to receive the data which is generated by the respective sensors 34, 35, 36 and to forward it in a suitable manner to a central computer unit 44 via an electronic connection 42. The connection 42 is configured to allow the first part 31 and the second part 32 to exchange data over a relatively long distance and may, for example, be an internet connection or a telephone connection.

The second part 32 comprises the central computer unit 44 comprising a storage medium 46 and a processing unit (processor) 48. Measurement data from the respective sensors 34, 35 and 36 is received via the connection 42 and stored temporarily in the storage medium 46. The stored data can be retrieved from the storage medium 46 by the processing unit 48 which can process the data to form a suitable representation for a user and, based on the data, advise measures to be taken in order to reduce energy consumption. The display and the advice can, for example, be processed in a personalized webpage which can be placed on an internet server 52 via a suitable link 50. Obviously, the internet server 52 and the central computer unit 44 can be configured as a single unit.

Referring now to Fig. 1 and Fig. 2, a user declares in a first step 10 the first part 31 on a webpage of the external party. The first part 31 is, for example, received in a single housing and the housing is provided with a unique number. With the aid of the unique number, the first part 31 is registered with the external party, so the external party can associate the data derived from the sensors 34, 35, 36 of the first part 31 with the user. One embodiment involves not only registration but also activation of the first part 31. Furthermore, the communication with and the mode of operation of the first part 31 can be tested by the second part 32 via the electronic connection 42.

In step 12, the first part 31 is arranged in the user's building. All references in the present description to a building relate to at least a part of the building; that is to say, the term 'building' is understood in the present description to include, for example, a room in a building. The first part 31 is arranged in such a way that the presence sensor 34 within the building can detect whether a person is present. Furthermore, an energy consumption sensor of the first part 31 should be arranged in a suitable manner. The energy consumption sensor can comprise a light sensor 35. The light sensor 35 should not, for example, be placed behind or beneath another object in order not to impair the mode of operation of the light sensor 35. The temperature sensor 36 should not, for example, be placed in proximity to a heat source, such as a fire or radiator, nor should it be placed in proximity to a cold source such as a window or doorway. It should also be understood that the order of the steps 10 and 12 is arbitrary.

In step 14, the device 30 is ready for use. Data is collected by the sensors 34, 35, 36 and sent via the data collection device 40 and the connection 42 of the sensors 34, 35, 36 to the central computer unit 44, as indicated in step 16. In the embodiment shown, the data from the sensors 34 - 36 is sent by the collection device 40 directly to the computer unit 44. In another embodiment, the data is stored in the data collection device 40 and subsequently sent to the computer unit 44.

After a collection period, for example a week or a month, the collected data is displayed in step 18. For this purpose, the processing unit 48 retrieves the data from the storage medium 46. The data is processed to form a clear display on the basis of which a user can easily see when energy is being consumed unnecessarily. For example, the processing unit 48 can further provide advice, based on the collected data, about cost-effective technical measures for saving energy.

In step 20, the display and the advice are received on a personalized webpage which the user can visit. The webpage is, for example, personalized on the basis of the data provided during registration (step 10). In step 22, the user can follow the advice and take measures.

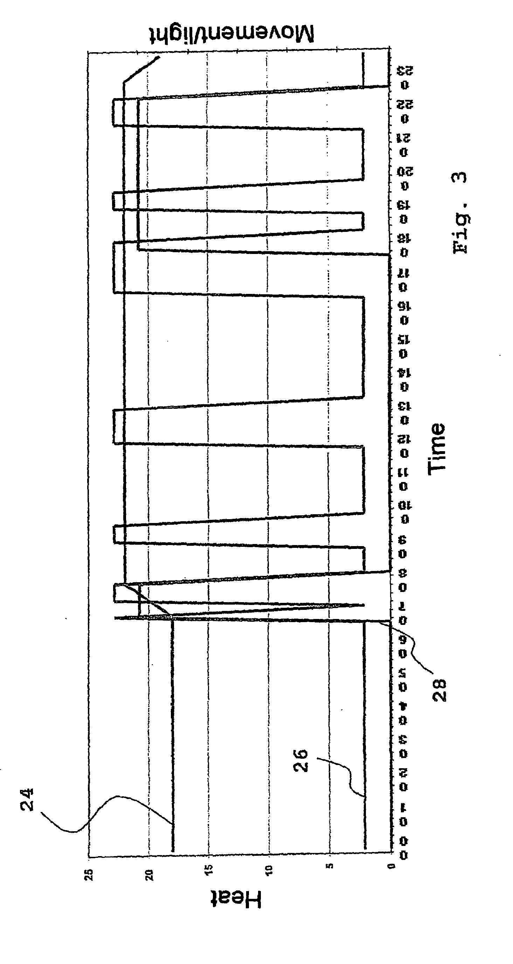

Fig. 3 shows an example of a display such as can be provided by the computer unit 44. Fig. 3 is a graph with time on the horizontal axis. The time on the horizontal axis covers one day from 0:00 to 23:59. The left-hand vertical axis plots a room temperature which is related to a first graph line 24 and the right-hand vertical axis plots the presence of a person in a room, which is related to a second graph line 26, and the turning-on of a bulb, which is related to a third graph line 28.

The graph of Fig. 3 shows that a resident gets up about 7:00. Before that time, the room temperature is relatively low (first graph line 24) and rises from 7:00. About 7:00 the light is switched on (see third graph line 28) and the resident enters the room (see second graph line 26). While the light remains turned on, the resident leaves the room at least once. About 8:00 the light is switched off. Just before 8:00 the room is heated and the room remains at the same high temperature until 23:00 despite the fact that the resident is not present in the room for a number of hours during the day, for example from 15:00 to 18:00. From 19:00 to 23:00 the light is turned on, while the resident leaves the room a number of times. This means that the user can save on heating, for example between 15:00 and 18:00 (and this can easily be achieved, for example, with the aid of a carefully set clock thermostat) and on lighting by turning off the light when he or she leaves the room. The graph of Fig. 3 and the above-described brief advice can be displayed on a webpage, so this graph will help the resident to understand his own behaviour and use of energy and to take measures.

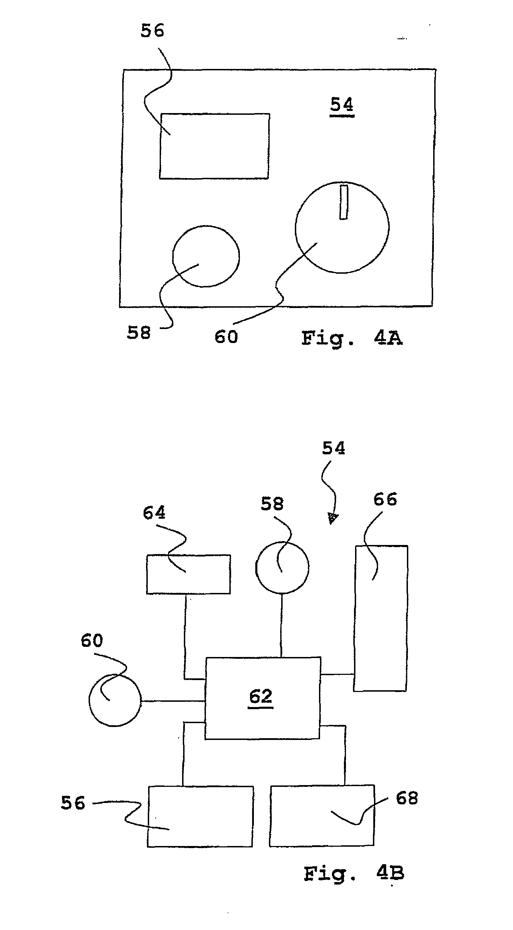

Fig. 4A and 4B show an energy-saving device 54. In the embodiment shown, the energy-saving device 54 comprises a display device 56 to display data, a state sensor, for example a presence sensor 58 for the detecting of the presence of a person in the space in which the device is positioned, and an adjustment knob 60 for the setting of a desired room temperature. The device 54 further comprises a processing unit 62 which is connected to the display device 56, the adjustment knob 60 and the presence sensor 58. The processing unit 62 is further connected to a temperature sensor 64, a storage medium 66 and a heating appliance 68.

During use, a user can set a desired temperature using the adjustment knob 60. If the temperature sensor 64 indicates a temperature lower than the set temperature, then the processing unit 62 will control the heating appliance 68 in order to heat the room until the desired temperature has been reached. However, this is done only if a person is present in the room. The presence of a person is detected and forwarded to the processing unit by the presence sensor 58. If no person is present, the processing unit 62 can turn off the heating appliance 68 or select the desired temperature so as to be lower than the set temperature. Other settings are also possible in such a case. For example, the set temperature may be dependent on the period of time over which no person is detected in the room.

The detected presence or absence can be stored in the storage medium 66 so, once the data has been stored for a period of time, it is possible to predict when a person will or will not be present in the room. On the basis of such a prediction, the processing and control unit 62 can allow the heating appliance 68 to function as economically as possible. However, if the presence of a person is detected at a moment when no person is expected, then the heating appliance 68 can still be switched on.

Similarly, the variation in temperature in the room can be stored as a function of the switching-on or switching-off of the heating appliance 68 so it can be determined, based on the stored data, what temperature in the room should be assumed when a user does not require any heat, so as to minimize energy consumption, as heating-up often requires more energy than maintaining a steady temperature. Switching off the heating appliance 68 if no heat is desired is therefore not always the most energy-efficient option.

In one embodiment, both the temperature data and the presence data are stored. In other embodiments, only temperature data or only presence data is stored.

It will be understood that the described embodiments are merely examples of the invention that can be embodied in a broad range of configurations. Therefore, specific structural and functional details which are disclosed in the present document should not be regarded as entailing limitation but rather exclusively as a basis for the claims and as a representative basis in order to provide a person skilled in the art with enough information in order to carry out the invention. The terms and phrases used in the present document are not intended to entail limitation but rather to provide a clear description of the invention.

The term "a" or "an" which is used in the present document is defined as one or more than one. The term "number" which is used in the present document is defined as two or more than two. The term "another" which is used in the present document is defined as at least a second or more. The term "comprising" and/or "with" or "having" which is used in the present document does not rule out other components which are not mentioned (i.e. does not entail limitation). The term "coupled" which is used in the present document is defined as connected, not necessarily directly and not necessarily mechanically.

## Claims

1. Method for saving energy, wherein the method includes the steps of:
(a) placing a presence sensor in a building for determining the presence of a person in the building or a part thereof, the presence sensor generating presence data;
(b) placing of an energy consumption sensor in the room for determining energy consumption, the energy consumption sensor generating consumption data;
(c) collecting and storing of the presence data and the consumption data as a function of time; and
(d) simultaneous displaying of the collected data for determining energy consumption in the building or the part thereof when no person is present in the building or the part thereof and for determining energy-saving measures based on the determination of the energy consumption when no person is present.

2. Method according to claim 1, wherein step (c) includes
- electronically sending of the collected consumption data and presence data to a computer processing unit.

3. Method according to either claim 1 or claim 2, wherein step (c) includes electronically sending of the collected data to a central computer processing unit via a network connection.

4. Method according to claim 3, wherein step (d) includes displaying the collected data on a webpage.

5. Device for saving energy, wherein the device comprises:
- a presence sensor for determining the presence of a person in a building, or a part thereof, the presence sensor generating presence data;
- an energy consumption sensor for determining energy consumption, the energy consumption sensor generating consumption data;
- a data collection device which is operatively connected to the presence sensor and the energy consumption sensor for the collecting of the consumption data and the presence data from the respective sensors;
- a storage medium which is operatively connected to the data collection device for the storing of the collected data;
- a display device which is operatively connected to the storage medium and/or the data collection device to display the collected data for determining energy consumption in the building, or the part thereof, when no person is present in the building, or the part thereof.

6. Device according to claim 5, wherein the data collection device is wirelessly connectable to each of the sensors.

7. Device according to either claim 5 or claim 6, wherein the data collection device and/or the storage medium are connectable to a central processing unit via a network connection.

8. Device according to claim 7, wherein the central processing unit is configured to generate a webpage based on the collected data to display the collected data.

9. Energy-saving device, wherein the device comprises:
- a state sensor for determining an environmental condition in a building or part thereof, the state sensor generating state data;
- an energy consumption sensor for determining energy consumption, the energy consumption sensor generating consumption data;
- a control circuit for controlling an apparatus based on the presence data and the energy consumption data.

10. Energy-saving device according to claim 9, wherein the state sensor comprises a presence sensor for determining the presence of a person.

11. Energy-saving device according to either claim 9 or claim 10, wherein the energy consumption sensor comprises a temperature sensor and wherein the control circuit is configured to control a heating apparatus.

12. Energy-saving device according to claim 11, wherein the state sensor comprises an air humidity sensor for determining air humidity.

13. Energy-saving device according to either claim 11 or claim 12, wherein the state sensor comprises a presence sensor and wherein the device further comprises:
- a data collection device which is operatively connected to the presence sensor and the energy consumption sensor for the collecting of the consumption data and the presence data from the respective sensors; and
- a storage medium which is operatively connected to the data collection device for the storing of the collected data;
- a processing unit for the processing of the presence data and the consumption data for the generating of a normal presence pattern and a normal consumption pattern as a function of time and for the controlling, based on the normal presence pattern, of the heating appliance in such a way that the energy consumption of the heating appliance is substantially minimal if a person is present in accordance with the normal presence pattern.
